# EUROPEAN PATENT APPLICATION

(11) **EP 2 387 164 A2**
(43) Date of publication of application: **16.11.2011**
(21) Application number: 11164884.6
(22) Date of filing: 05.05.2011
(51) Int. Cl.: H04B 7/185

(54) **Satellite Communication system and method thereof**

(30) Priority: 10.05.2010 US 776461
(71) Applicant: Delphi Technologies, Inc., Troy, MI 48007 (US)
(72) Inventor: Walker, Glenn A., Greentown, IN 46936 (US)
(74) Representative: Denton, Michael John

(57) **Abstract**

A communication system (100) and method (200) thereof are provided, wherein the system (100) includes a first satellite (102A) configured to re-transmit at least a first transmitted signal at a first frequency band, a second satellite (102B) configured to re-transmit the first transmitted signal at a second frequency band, and a first terrestrial repeater (104A) configured to re-transmit the first transmitted signal at a third frequency band. The system (100) further includes a third satellite (102C) configured to re-transmit a second transmitted signal at the third frequency band that is different than the first transmitted signal re-transmitted by the first and second satellites (102A, 102B), such that the first signal re-transmitted by the first terrestrial repeater (104A), and the second signal re-transmitted by the third satellite (102C) interfere with one another, wherein the first signals re-transmitted by the first satellite (102A), the second satellite (102B), and the first terrestrial repeater (104A) includes substantially the same data.

## Description

### Technical Field

The present invention generally relates to a communication system and method thereof, and more particularly, to a communication system having a plurality of satellites and at least one terrestrial repeater and a method thereof.

### Background of the Invention

In October of 1997, the Federal Communications Commission (FCC) granted two national satellite radio broadcast licenses. In doing so, the FCC allocated twenty-five (25) megahertz (MHz) of the electromagnetic spectrum for satellite digital broadcasting, at which time twelve and one-half (12.5) MHz was owned by XM Satellite Radio, Inc. of Washington, D.C. (XM), and 12.5 MHz was owned by Sirius Satellite Radio, Inc. of New York City, N.Y. (Sirius). Both companies provided subscription-based digital audio that was transmitted from communication satellites, and the services provided by these and other SDAR companies were capable of being transmitted to both mobile and fixed receivers on the ground.

Generally, in the XM satellite system, two (2) communication satellites were present in a geostationary orbit, wherein one satellite was positioned at longitude one hundred fifteen degrees (115) degrees (west), and the other at longitude eighty-five (85) degrees (east). Accordingly, the satellites were always positioned above the same spot on the earth. In the Sirius satellite system, however, three (3) communication satellites were present, which all traveled on the same orbital path, spaced approximately eight (8) hours from each other. Consequently, two (2) of the three (3) satellites were "visible" to receivers in the United States at all times. Since both satellite systems generally had difficulty providing data to mobile receivers in urban canyons and other high population density areas with limited line-of-sight satellite coverage, both systems utilized terrestrial repeaters as gap fillers to receive and re-broadcast the same data that was transmitted in the respective satellite systems.

In order to improve satellite coverage reliability and performance, SDAR systems generally use three (3) techniques that represent different kinds of redundancy known as diversity. The techniques include spatial diversity, time diversity, and frequency diversity. Spatial diversity refers to the use of two (2) satellites transmitting near-identical data from two (2) widely-spaced locations. Time diversity is implemented by introducing a time delay between otherwise identical data, and frequency diversity includes the transmission of data in different frequency bands. SDAR systems may utilize one (1), two (2), or all of the above-noted techniques.

The current system transmits one signal waveform in one frequency band from one transmission source. In the case of hybrid networks (satellites and terrestrial transmitters/repeaters), there are redundant sources of information. Each source has a separate waveform on a separate frequency band. The receiver uses a combination of those sources to obtain the desired output. In general, if the signal is strong enough, only one source is needed to get the output. The availability of the output is based on the independent nature of receiving the signals. That is, the probability of a good output is based on the independent probability of any one of the sources being available.

Spectrums at lower frequencies are very valuable and there is a need/desire to maximize the use of spectrum. Due to an increasing demand for new services (Media FLO, DVB-H, Video applications for passengers etc), there is a demand for a higher data capacity. Since the bandwith of the SDAR is limited, ways must be found to improve the capacity of the existing system. A problem arising from this enhanced capacity and the therefore "new" signal, is the number of existing receivers (legacy receivers). Old receivers cannot get an advantage of the additional data, but it must be ensured, that the legacy receivers are not negatively affected. A method was developed to help the hybrid system (satellite + terrestrial) to add additional capacity (spectrum re-use or more spectrum efficiency). Because of the probability nature of the reception in these hybrid networks, the present invention uses that feature to add additional signals without negatively affecting legacy receivers

### Summary of the Invention

According to one aspect of the present invention, a communication system is provided that includes a first satellite configured to receive and re-transmit at least a first transmitted signal at a first frequency band, a second satellite configured to receive and re-transmit the first transmitted signal at a second frequency band, a first terrestrial repeater corresponding to the first and second satellite, the first terrestrial repeater configured to receive and re-transmit the first transmitted signal at a third frequency band, and a third satellite configured to receive and re-transmit a second transmitted signal at the third frequency band that is different than the first transmitted signal received and re-transmitted by the first and second satellites, such that the first signal retransmitted by the first terrestrial repeater, and the second signal re-transmitted by the third satellite interfere with one another, wherein the first signal retransmitted by the first satellite, the second satellite, and the first terrestrial repeater includes substantially the same data.

According to another aspect of the present invention, a method of communicating at least one signal from a transmitter to a receiver, the method includes the steps of receiving and re-transmitting a first transmitted signal at a first frequency band by a first satellite, receiving and re-transmitting the first transmitted signal at a second frequency band by a second satellite, receiving and re-transmitting the first transmitted signal at a third frequency band by a first terrestrial repeater that corresponds to the first satellite, and receiving and re-transmitting a second transmitted signal at a third frequency band by a third satellite that is different than the first transmitted signal received and retransmitted by the first and second satellites, such that the first signal retransmitted by the first terrestrial repeater, and the second signal re-transmitted by the third satellite interfere with one another, wherein the first signals retransmitted by the first satellite, the second satellite, and the first terrestrial repeater include substantially the same data.

These and other features, advantages, and objects of the present invention will be further understood and appreciated by those skilled in the art by reference to the following specification, claims, and appended drawings.

### Brief Description of the Drawings

The present invention will now be described, by way of example, with reference to the accompanying drawings, in which:

Fig. 1 is an environmental view of a communication system, in accordance with one embodiment of the present invention;

Fig. 2 is a diagram illustrating a plurality of signals transmitted over a plurality of frequency bands;

Fig. 3 is a diagram illustrating a plurality of signals transmitted over a plurality of frequency bands, in accordance with one embodiment of the present invention;

Fig. 4 is a diagram illustrating a plurality of signals transmitted over a plurality of frequency bands, in accordance with one embodiment of the present invention;

Fig. 5 is a diagram illustrating a plurality of signals transmitted over a plurality of frequency bands, in accordance with one embodiment of the present invention;

Fig. 6 is a diagram illustrating a plurality of signals transmitted over a plurality of frequency bands, in accordance with one embodiment of the present invention;

Fig. 7 is a diagram illustrating a plurality of signals transmitted over a plurality of frequency bands, in accordance with one embodiment of the present invention;

Fig. 8 is a diagram illustrating a plurality of signals transmitted over a plurality of frequency bands, in accordance with one embodiment of the present invention; and

Fig. 9 is a flowchart illustrating a method of communicating at least one signal from a transmitter to a receiver, in accordance with one embodiment of the presentation.

### Description of the preferred Embodiments

For the purpose of the present invention, certain terms shall be interpreted in accordance with the following definitions:-
Forward Error Correction (FEC): A method of obtaining error control in data transmission in which the source (transmitter) sends redundant data and the destination (receiver) recognizes only the portion of the data that contains no apparent errors. Because FEC does not require handshaking between the source and the destination, it can be used for broadcasting of data to many destinations simultaneously from a single source.
Legacy receiver: A current or existing SDAR receiver that is capable of interpreting legacy coded data. Legacy receivers will not have the capability of decoding the new coded data.
Ensemble: For the XM system, now called the high band, there is 12.5MHz of spectrum that has 2 ensembles. Each ensemble occupies approx. 6.25MHz of spectrum. For XM, roughly 1.9MHz of spectrum is used for each satellite signals and 2.5MHz for each terrestrial. XM has used the term ensemble similar to DAB, it is a collection of channels in a TDM transport stream. To reduce cost in the original chipset, it was decided to only process half of their band (hence the A and B ensemble)

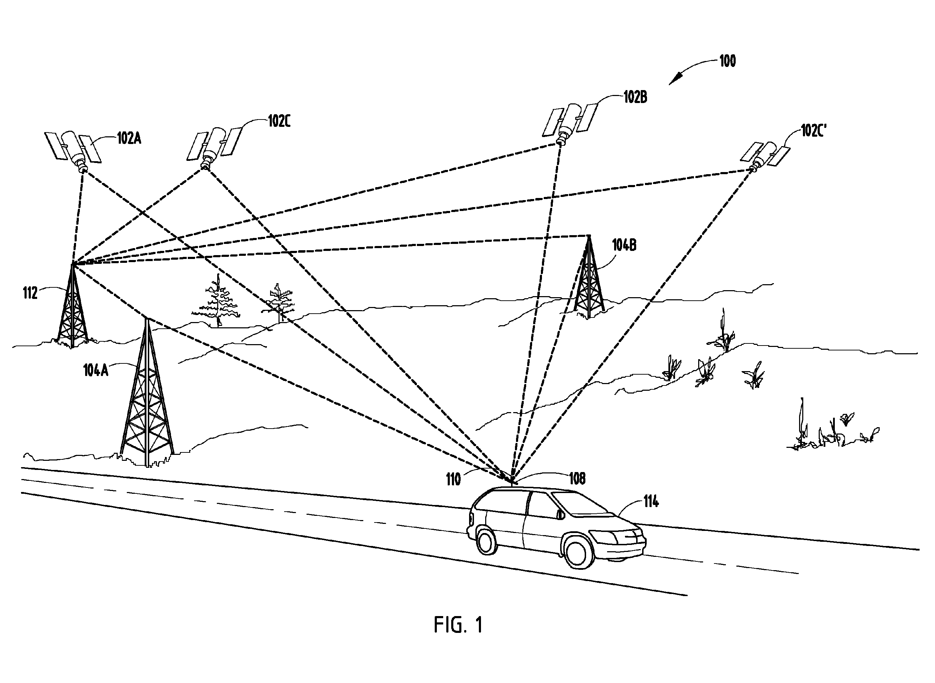

With respect to Fig. 1, a communication system is generally shown at reference identifier 100. The communication system 100 can include a first satellite 102A configured to receive and re-transmit at least a first transmitted signal at a first frequency band, and a second satellite 102B configured to receive and re-transmit the at least first transmitted signal at a second frequency band. The communication system 100 can further include a first terrestrial repeater 104A corresponding to the first and second satellites 102A, 102B, wherein the first terrestrial repeater 104A can be configured to receive and re-transmit the first transmitted signal at a third frequency band. The communication system 100 can also include a third satellite 102C configured to receive and re-transmit a second transmitted signal inside the third frequency band that is different than the first transmitted signal received and re-transmitted by the first and second satellites 102A, 102B, such that the signal re-transmitted by the first terrestrial repeater 104A and the signal retransmitted by the third satellite 102C interfere with one another, wherein the signal is retransmitted by the first satellite 102A, the second satellite 102B, and the first terrestrial repeater 104A can include substantially the same data, as described in greater detail herein.

By way of explanation and not limitation, if a source provider had one or more satellites currently orbiting or placed into orbit that may not otherwise be used, such satellites could be representative of the third satellite 102C. In such an embodiment, by using advance forward error correction (FEC) and receiver antenna beam steering, a signal can be transmitted from these otherwise non-operational satellites, which can provide video signal availability similar to that of the audio signal. By transmitting an additional satellite signal (e.g., the signal transmitted by the third satellite 102C) in the terrestrial band (e.g., the third frequency band), additional satellite capacity can be added to the communication system 100. However, under certain circumstances, transmitting the additional satellite signal can result in interference with the terrestrial signal communicated by the first terrestrial repeater 104A.

According to one embodiment, the signal re-transmitted by the third satellite 102C can be distributed substantially optimally across the third frequency band. Typically, such optimal distribution of the third satellite 102C signal across the third frequency band can reduce the interference thereof. It should be appreciated by those skilled in the art that the first, second, and/or third frequency bands can each include a plurality of frequency bands. By way of explanation and not limitation, two (2) frequency bands or four (4) frequency bands can be included in the third frequency band.

In an embodiment that utilizes two (2) satellites 102A, 102B that are both in geostationary orbit at different longitudinal Earth locations, the signal communicated by the third satellite 102C can be separated into four (4) frequency bands within the third frequency band to reduce interference with the terrestrial signal when only one of the satellites 102A, 102B is visible and the other is blocked. In an alternate embodiment that utilizes three (3) satellites (e.g., the three (3) satellites being similar to the first and second satellites (102A, 102B)) that all travel along substantially the same orbit path and are approximately equally spaced from one another, the signal communicated by the third satellite 102C can be separated into two (2) frequency bands within the third frequency band to reduce interference with the terrestrial signal when only one of the satellites 102A, 102B is visible and the other two (2) are blocked.

The signal re-transmitted by the first terrestrial repeater 104A can include a legacy terrestrial signal that is frequency interleaved, such that a receiver 108, which is in communication with the first terrestrial repeater 104A and includes a legacy FEC device, can receive the interfering signal retransmitted by the third satellite 102C randomly spread across the data. Thus, the interfering satellite signal (e.g., the signal communicated by the third satellite 102C) appears to the legacy FEC device as an interfering satellite signal randomly spread across desired data.

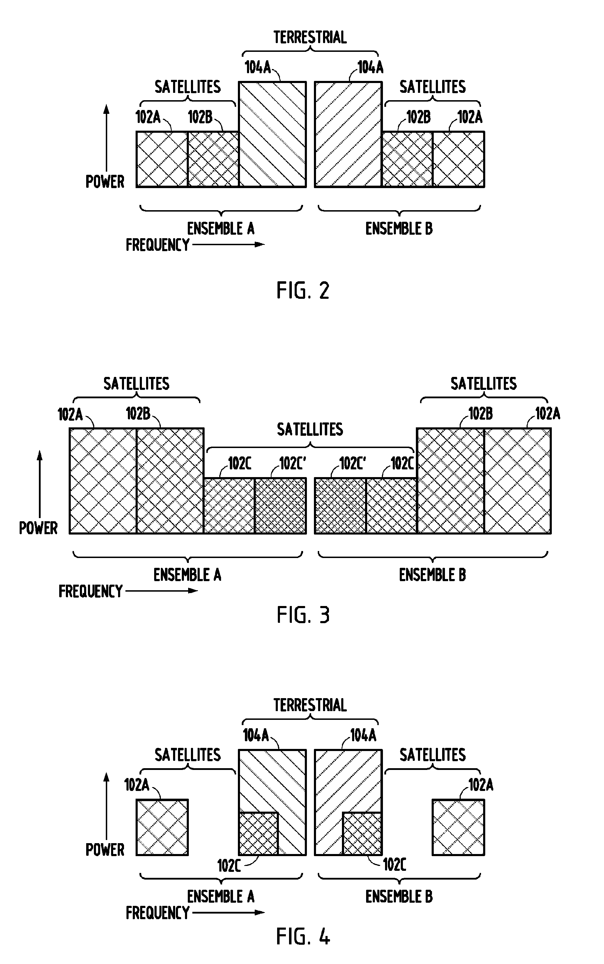

With respect to an exemplary scenario, as illustrated in Fig. 2, in operation, Ensemble A can include signals communicated from the first satellite 102A, the second satellite 102B, and the first terrestrial repeater 104A at the first frequency band, and Ensemble B can include signals communicated from the first satellite 102A, the second satellite 102B, and the first terrestrial repeater 104A at a second frequency band. Typically, the signals communicated from the terrestrial repeater 104A have a greater power level than the signals communicated from the first and second satellites 102A, 102B. The first terrestrial repeater 104A communicating a signal having greater power can be beneficial for handheld receivers. In such a scenario, none of the first and second satellites 102A, 102B nor the first terrestrial repeater 104A are blocked with respect to the receiver.

According to one embodiment, the third satellite 102C can be co-located with either the first satellite 102A or the second satellite 102B. Typically, the third satellite 102C can be co-located with the first satellite 102A, while a fourth satellite 102C' can be co-located with the second satellite 102B. Typically, the third satellite 102C corresponds to the fourth satellite 102C', such that a substantially similar signal is re-transmitted by the third and fourth satellite signals 102, 102C'. In such an embodiment, the third satellite 102C can re-transmit the signal in substantially a middle of the third frequency band. This can cause an interference with the terrestrial signal, but the signal retransmitted by the third satellite 102C can be co-located with the old satellite signal 102A. Typically, this co-location can be used to ensure that interference only occurs when the satellites are both visible. When the interference occurs, there is typically a need for a terrestrial signal, and by co-locating the two (2) signals, there is minimal perceived degradation to the original audio system. Such an embodiment can enhance a probability of an adequate satellite signal for video in rural areas; however, new video signal can be destroyed in the presence of a terrestrial signal, such that a new terrestrial signal is needed for such a new video signal.

Additionally, a second terrestrial repeater 104B that corresponds to the third and fourth satellites 102C, 102C' can be included in the communication system 100. The second terrestrial repeater 104B can be configured to receive and re-transmit at least the second transmitted signal at a fourth frequency band. The fourth frequency band can be a digital video broadcasting-handheld (DVB-H) network, a MediaFLO^{™} network, the like, or a combination thereof.

According to one exemplary scenario, in operation, as illustrated in Fig. 3, Ensembles A and B include the signals re-transmitted by the first and second satellites 102A, 102B, and the second signal re-transmitted by the third satellite 102C, wherein the signal re-transmitted by the first terrestrial repeater 104A is substantially blocked and not received by the receiver 108. This exemplary scenario can be when the receiver 108 is in a rural area and there are minimal or no terrestrial repeaters 104A. The second signal re-transmitted by the third and fourth satellites 102C, 102C' may otherwise interfere substantially equally with the signal re-transmitted by the first terrestrial repeater 104A if the signal was not blocked. In such a scenario, both the old satellite signals (e.g., signals re-transmitted by the first and second satellites) and the new satellite signal (e.g., a signal re-transmitted by the third and fourth satellites 102C, 102C') can be received by the receiver 108 (e.g., none of the satellites 102A, 102B, 102C, 102C' are blocked).

In regards to an exemplary scenario illustrated in Fig. 4, in operation, Ensembles A and B can include the signal re-transmitted by the first satellite 102A, the signal re-transmitted by the first terrestrial repeater 104A, and the second signal re-transmitted by the third satellite 102C. In such an exemplary scenario, the second satellite 102B and the fourth satellite 102C' can be blocked, such that the receiver 108 does not receive the signals re-transmitted by either the second satellite 102B nor the fourth satellite 102C', but does receive the signals re-transmitted by the first satellite 102A, the third satellite 102C, and terrestrial repeater 104A. This exemplary scenario can be when the receiver 108 is in an urban area, with a visible terrestrial repeater 104A and the first satellite 102A is co-located with the third satellite 102C, both being visible to the receiver 108, and the second satellite 102B is co-located with the fourth satellite 102C', both being blocked with respect to the receiver 108. Further, since the fourth satellite 102C' is blocked, the second signal re-transmitted by the fourth satellite 102C' does not interfere with the portion of the terrestrial repeater signal that corresponds to the signal re-transmitted by the second satellite 102B.

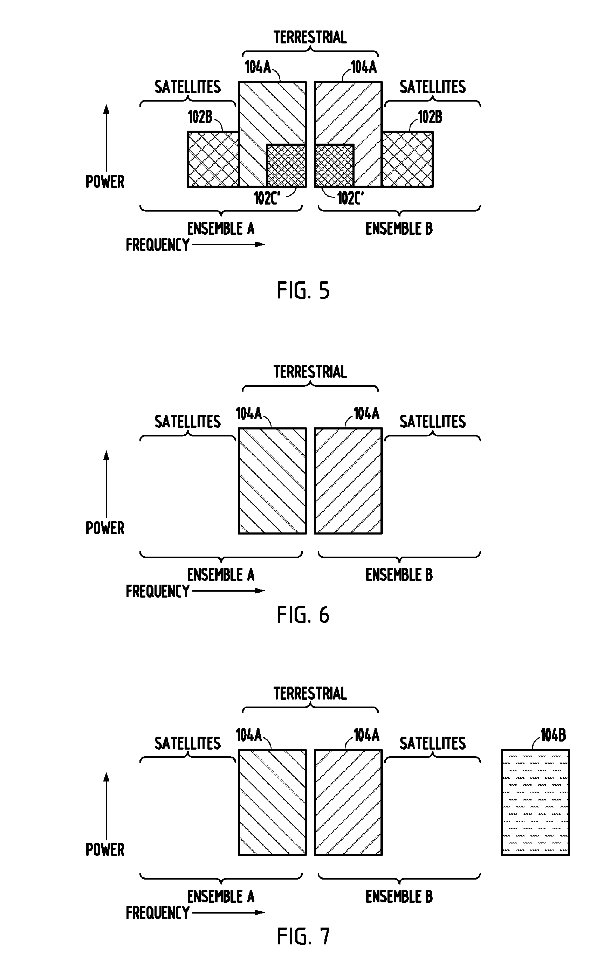

As to an exemplary scenario illustrated in Fig. 5, in operation, Ensemble A and Ensemble B can each include a signal re-transmitted by the second satellite 102B, the signal re-transmitted by the first terrestrial repeater 104A, and the second signal re-transmitted by the fourth satellite 102C'. This exemplary scenario can be when the receiver 108 is in an urban area, with a visible terrestrial repeater 104A, and the first satellite 102A is co-located with the third satellite 102C, both being blocked with respect to the receiver 108, and the second satellite 102B is co-located with the fourth satellite 102C', both being visible to receiver 108. The first satellite 102A is blocked, such that the receiver 108 does not receive the signal re-transmitted from the first satellite 102A, and thus, the signal re-transmitted by the fourth satellite 102C' that corresponds to the first satellite 102A does not interfere with the portion of the terrestrial repeater signal 104A that corresponds to the signal re-transmitted by the first satellite 102A.

In regards to an exemplary scenario illustrated in Fig. 6, in operation, Ensembles A and B can include a signal re-transmitted by the first terrestrial repeater 104A. This exemplary scenario can be when the receiver 108 is in an urban area, with a visible terrestrial repeater 104A and the first satellite 102A is co-located with the third satellite 102C, both being blocked with respect to the receiver 108, and the second satellite 102B is co-located with the fourth satellite 102C', both being blocked with respect to the receiver 108. Thus, the signal retransmitted by the terrestrial repeater 104A is not interfered with by the signal re-transmitted by the third and fourth satellites 102C, 102C'. In such an exemplary scenario, there is no "new" signal available (e.g., the signal retransmitted by the third and fourth satellites 102C, 102C'), and thus, in order to get the data typically transmitted by the third and fourth satellites 102C, 102C', an additional terrestrial signal can be added to the communication system 100, as illustrated in Fig. 7. According to one embodiment, this new terrestrial signal can be a signal broadcast by the MediaFLO^{™} signal transmitted by the second terrestrial repeater 104B. Alternatively, a digital video broadcasting-handheld (DVB-H) network signal can be utilized.

Typically, any time there is an original terrestrial signal that the signal re-transmitted by the third and fourth satellites 102C, 102C' interferes with, the "new" terrestrial signal can be available. Thus, the new terrestrial signal, which can be re-transmitted by the first terrestrial repeater 104A or the second terrestrial repeater 104B typically covers a larger area than the original terrestrial signal, since the new system does not have new satellites available in the urban areas like the original system. Additionally or alternatively, an antenna 110 of the receiver 108 can be altered to increase the new signal availability in urban areas. Such alterations of the antenna 110 of the receiver 108, can include, but are not limited to, beam steering and null steering.

According to one embodiment, the signal re-transmitted by the third and fourth satellites 102C, 102C' can be a multiple input, multiple output (MIMO) encoded signal, which can allow the signals re-transmitted by the third and fourth satellites 102C, 102C' to reside on top of each other. When the signal is a MIMO encoded signal, the receiver 108 can be configured to receive the MIMO encoded signal and can include a multiple receive antenna 110 configured to decode the MIMO encoded signal, and the receiver 108 can further be configured to detangle signals from the multiple receive antenna 110.

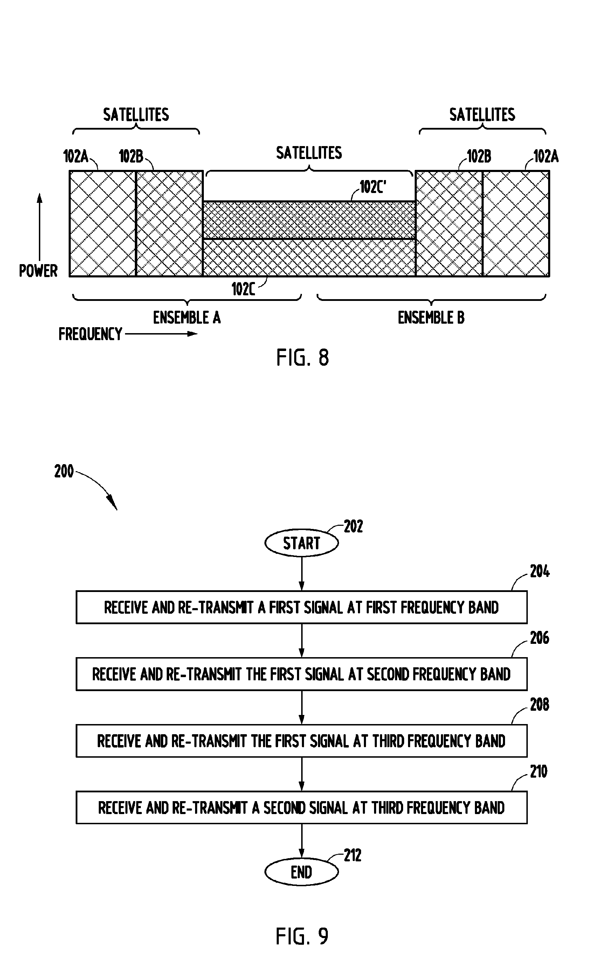

According to an alternate embodiment, the second signal re-transmitted by the third and fourth satellites 102C, 102C' can be encoded with an orthogonal sequence. In such an embodiment, the second signal can be encoded with an orthogonal sequence, such that the receiver 108 can be configured to receive the orthogonal sequence encoded signal, and separate the orthogonal sequence encoded signal as a function of a legacy satellite signal for timing recovery. Thus, a signal-to-noise ratio can be reduced by utilizing a repeating signal redundancy, rather than utilizing FEC redundancy. Typically, when one of the first and second satellites 102A, 102B is blocked, the legacy terrestrial repeater 104A sees half of the interference. By way of explanation and not limitation, the orthogonal sequence can be a short sequence, such as, but not limited to, [1,1] and [1, -1]. Additionally or alternatively, the orthogonal sequence can allow the two signals to reside on top of each other in a code division multiple access (CDMA) format (e.g., Fig. 8).

In regards to Figs. 1 and 9, a method of communicating at least one signal from a transmitter 112 to a receiver 108 is generally shown in Fig. 9 at reference identifier 200. The method starts at step 202, and proceeds to step 204, wherein a first signal is received and re-transmitted at a first frequency band. At step 206, the first signal is received and re-transmitted at a second frequency band. Typically, step 204 includes the first satellite 102A, and step 206 includes the second satellite 102B. At step 208, the first signal is received and retransmitted at a third frequency band. Typically, step 208 includes the first terrestrial repeater 104A, such that steps 204, 206, and 208 can be performed substantially simultaneously.

The method 200 can then proceed from step 204, step 206, step 208, or a combination thereof to step 210. At step 210, a second signal is received and re-transmitted at the third frequency band. Typically, step 210 includes the third and fourth satellites 102C, 102C'. According to one embodiment, the second signal is different than the first signal, such that the first signal retransmitted by the first terrestrial repeater 104A and the second signal retransmitted by the third and fourth satellites 102C, 102C' interfere with one another, wherein the first signals re-transmitted by the first satellite 102A, the second satellite 102B, and the first terrestrial repeater 104A include substantially the same data.

Advantageously, the system 100 and method 200 allow for transmitting an additional satellite signal in the terrestrial band, which provides additional satellite capacity. By communicating the additional data utilizing the additional satellite capacity, there is interference with the terrestrial signal; however, this interference can be reduced by distributing the satellite signals across the terrestrial band as described above. Further, the signal-to-noise ratio of the new signal can be reduced by using a repeating signal redundancy instead of forward error correction redundancy. Therefore, when the receiver 108 is included in a vehicle 114 or is otherwise mobile, the receiver 108 can continue to receive the first and second transmitted signals as the satellites 102A, 102B, 102C, 102C', and the terrestrial repeaters 104A, 104B are continuously blocked and unblocked based upon changing environmental conditions, while implementing the new signal does not have an adverse effect on legacy receivers. Additionally or alternatively, the use of the new satellite signal in the terrestrial band can utilize satellites in orbit that may not otherwise be used. It should be appreciated by those skilled in the art that additional or alternative advantages may be present based upon the described communication system 100 and method 200. It should further be appreciated by those skilled in the art that the elements or steps described herein can be combined in additional or alternative manners not explicitly stated herein.

## Claims

1. A communication system (100) comprising:
a first satellite (102A) configured to receive and re-transmit at least a first transmitted signal at a first frequency band;
a second satellite (102B) configured to receive and re-transmit said first transmitted signal at a second frequency band;
a first terrestrial repeater (104A) corresponding to said first and second satellites (102A, 102B), said first terrestrial repeater (104A) configured to receive and re-transmit said first transmitted signal at a third frequency band; and
a third satellite (102C) configured to receive and re-transmit a second transmitted signal at said third frequency band that is different than said first transmitted signal received and re-transmitted by said first and second satellites (102A, 102B), such that said first signal re-transmitted by said first terrestrial repeater (104A), and said second signal re-transmitted by said third satellite (102C) interfere with one another, wherein said first signals re-transmitted by said first satellite (102A), said second satellite (102B), and said first terrestrial repeater (104A) comprises substantially the same data.

2. The communication system (100) of claim 1, wherein said second signal re-transmitted by said third satellite (102C) is distributed substantially optimally across said third frequency band.

3. The communication system (100) of claim 2, wherein said third frequency band comprises a plurality of frequency bands.

4. The communication system (100) of claim 2, wherein said signal retransmitted by said first terrestrial repeater (104A) comprises a legacy terrestrial signal that is frequency interleaved, such that a legacy forward error correction (FEC) device in a receiver (108) that is in communication with said first terrestrial repeater (104A) receives said interfering signal re-transmitted by said third satellite (102C) randomly spread across said data.

5. The communication system (100) of any one of claims 2 to 4, wherein an Ensemble A and an Ensemble B each comprise said signal re-transmitted by said first satellite (102A) and said second satellite (102B) and said signal retransmitted by first terrestrial repeater (104A), and said second signal retransmitted by said third satellite (102C) interferes substantially equally with Ensemble A and Ensemble B.

6. The communication system (100) of any one of claims 2 to 4, wherein said second signal re-transmitted by said third satellite (102C) is encoded with an orthogonal sequence.

7. The communication system (100) of claim 6, wherein said second signal is encoded with said orthogonal sequence, such that a receiver (108) configured to receive said orthogonal sequence encoded signal is further configured to separate said orthogonal sequence encoded signal as a function of a legacy satellite signal for timing recovery.

8. The communication system (100) of claim 1, wherein said third satellite (102C, 102C') is co-located with one of said first satellite (102A) and said second satellite (102B).

9. The communication system (100) of claim 8, wherein said third satellite (102C, 102C') re-transmits said second signal in substantially a middle of said third frequency band.

10. The communication system (100) of claim 9 further comprising a second terrestrial repeater (104B) corresponding to said third satellite (102C, 102C'), wherein said second terrestrial repeater (104B) is configured to receive and re-transmit at least the second transmitted signal at a fourth frequency band, which is one of a digital video broadcasting-handheld (DVB-H) network and a MediaFLO™ network.

11. A method (200) of communicating at least one signal from a
transmitter (112) to a receiver (108), said method (200) comprising the steps of:
receiving (204) and re-transmitting a first transmitted signal at a first frequency band by a first satellite (102A);
receiving (206) and re-transmitting said first transmitted signal at a second frequency band by a second satellite (102B);
receiving (208) and re-transmitting said first transmitted signal at a third frequency band by a first terrestrial repeater (104A) that corresponds to said first satellite (102A); and
receiving (210) and re-transmitting a second transmitted signal at a third frequency band by a third satellite (102C) that is different than said first transmitted signal received and re-transmitted by said first and second satellites (102A, 102B), such that said first signal re-transmitted by said first terrestrial repeater (104A), and said second signal re-transmitted by said third satellite (102C) interfere with one another, wherein said first signals re-transmitted by said first satellite (102A), said second satellite (102B), and said first terrestrial repeater (104A) comprise substantially the same data.

12. The method (200) of claim 11 further comprising the step of distributing said second signal re-transmitted by said third satellite (102C) substantially optimally across said third frequency band.

13. The method (200) of claim 12 wherein said first signal retransmitted by said first terrestrial repeater (104A) comprises a legacy terrestrial signal that is frequency interleaved, such that a legacy forward error correction (FEC) device in a receiver (108) that is in communication with said first terrestrial repeater (104A) receives said interfering signal re-transmitted by said third satellite (102C) randomly spread across said data.

14. The method (200) of claim 12 further comprising the step of encoding said second signal re-transmitted by said third satellite (102C) utilizing a multiple input, multiple output (MIMO) encoding.

15. The method (200) of claim 12 or claim 13 further comprising the step of encoding said second signal re-transmitted by said third satellite (102C) by utilizing an orthogonal sequence.
